# EUROPÄISCHE PATENTANMELDUNG

(11) **EP 0 596 354 A2**
(43) Veröffentlichungstag der Anmeldung: **11.05.1994**
(21) Anmeldenummer: 93117220.9
(22) Anmeldetag: 23.10.1993
(51) Int. Cl.: F16H 61/18, F16H 59/08

(54) **Eingriffsübersteuerungssystem für ein Getriebe**

(30) Priorität: 02.11.1992 US 970759
(71) Anmelder: DEERE & COMPANY, Moline, Illinois 61265 (US)
(72) Erfinder: Patton, Jon Richard, Coffeyville, Kansas 67337 (US); Harris, Robert William, Coffeyville, Kansas 67337 (US)
(74) Vertreter: Feldmann, Bernhard

(57) **Zusammenfassung**

Es wird ein Eingriffsübersteuerungssystem für die Steuerung eines Kraftfahrzeuggetriebes vorgeschlagen, welches mehrere durch Hydraulikdruck betätigbare Steuerelemente (C1, C2) zum Einrücken eines Ganges des Getriebes (12) in Abhängigkeit von der Einstellung eines Schalthebels (14), welcher Neutral- und Nichtneutralstellungen aufweist, sowie mehrere Steuerventile (16) zur Steuerung des Eingangsdrucks der Steuerelemente (C1, C2) und eine Pumpe (18) zur Versorgung der Steuerventile (16) mit Druckflüssigkeit aufweist.

Um zu vermeiden, daß beim Starten des Fahrzeugs ein Gang eingelegt ist, wird ein Eingriffsübersteuerungssystem vorgeschlagen, das auch dort anwendbar ist, wo der Schalthebel lediglich elektrische Signale abgibt.

Hierzu enthält das Eingriffsübersteuerungssystem einen elektrischen Schalter (84), der mit dem Schalthebel (14) in Verbindung steht und eine Magnetspule (82) erregt, wenn sich der Schalthebel (14) in seiner Neutralposition befindet. Der Schalter (84) schaltet die Magnetspule (82) ab, wenn sich der Schalthebel (14) in einer Nichtneutrallage befindet. Ein Eingriffsübersteuerungsventil (20) enthält ein Pilotventil (54, 80), das die Verbindung zwischen der Pumpe (18), einem Reservoir und den Steuerelementen (C1, C2) steuert. Die Magnetspule (82) steuert das Pilotventil (54, 80). Das Eingriffsübersteuerungsventil (20) enthält ferner eine Pilotkammer (72), die sich unter Druck setzen läßt, um das Ventil (20) in eine Stellung zu bringen und zu halten, in der die Pumpe (18) mit den Steuerelementen (C1, C2) in Verbindung steht.

## Beschreibung

Die Erfindung betrifft ein Eingriffsübersteuerungssystem für die Steuerung eines Kraftfahrzeuggetriebes gemäß den Merkmalen des Oberbegriffs des Patentanspruchs 1.

Es ist bekannt, ein Eingriffsübersteuerungsventil für eine Fahrzeuggetriebesteuerung zu verwenden. Ein derartiges, an John Deere Schleppern verwendetes Eingriffsübersteuerungsventil ist hydraulisch betätigbar und wird eingestellt, um einen Getriebeeingriff in Abhängigkeit eines Drucksignals zu ermöglichen. Das Drucksignal wird nur dann erzeugt, wenn der Schalthebel oder ein diesem zugeordnetes Ventil sich in einer Neutralstellung befindet. Wird beispielsweise die Antriebsmaschine gestartet, während der Schalthebel sich noch in einer Gangposition befindet, so arbeiten die Getriebekupplungen so lange nicht, bis der Schalthebel in seine Neutralstellung bewegt wurde.

Bei elektrisch gesteuerten Getrieben führt jedoch häufig lediglich eine elektrische Leitung zu dem Schalthebel. Es ist wünschenswert, eine Eingriffsübersteuerungsfunktion auch für elektronisch gesteuerte Getriebe bereitzustellen.

Die der Erfindung zugrunde liegende Aufgabe wird darin gesehen, ein Eingriffsübersteuerungssystem der eingangs genannten Art anzugeben, das auch dort anwendbar ist, wo der Schalthebel lediglich elektrische Signale abgibt und welches sich funktionsmäßig nicht leicht umgehen läßt und Fehlfunktionen vermeidet.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das Eingriffsübersteuerungsventil hat mehrere durch Hydraulikdruck betätigbare Steuerelemente, beispielsweise Kupplungen, durch die sich ein Gang des Getriebes in Abhängigkeit der Betätigung eines Schalthebels mit Neutral- und Nichtneutralstellungen einrücken läßt, mehrere Steuerventile zur Steuerung des Eingangsdrucks der Steuerelemente und eine Pumpe zur Versorgung der Steuerventile mit Druckflüssigkeit. Ein Ventil enthält eine erste Öffnung, die mit einem Pumpenausgang verbunden ist, eine zweite Öffnung, die mit mehreren Steuerventilen verbunden ist, und ein Ventilteil, das sich in eine erste Lage, in der die Verbindung zwischen der ersten und der zweiten Öffnung unterbrochen wird, und eine zweite Lage bewegen läßt, in der eine Verbindung zwischen der ersten und der zweiten Öffnung geöffnet wird. Eine vorgespannte Feder drängt das Ventilteil in seine erste Lage. Das Ventil weist ferner eine Pilotkammer auf, die sich unter Druck setzen läßt, um das Ventilteil in seine zweite Lage zu bewegen und in dieser Lage zu halten. Ein elektrischer Schalter steht mit dem Schalthebel in Verbindung. Er erregt eine Magnetspule, wenn der Schalthebel eine Neutralstellung einnimmt, und trennt die Magnetspule von einer Spannungsquelle, sofern der Schalthebel sich in einer Nichtneutralstellung befindet. Die Magnetspule betätigt ein Pilotventil, welches die Verbindung zwischen der Pumpe und der Pilotkammer steuert. Das Pilotventil wird bei erregter Magnetspule geöffnet und bei abgeschalteter Magnetspule geschlossen.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
Fig. 1 die schematische Darstellung eines erfindungsgemäßen Eingriffsübersteuerungssystems und
Fig. 2 die schematische Darstellung einer alternativen Ausgestaltung eines erfindungsgemäßen Eingriffsübersteuerungssystems

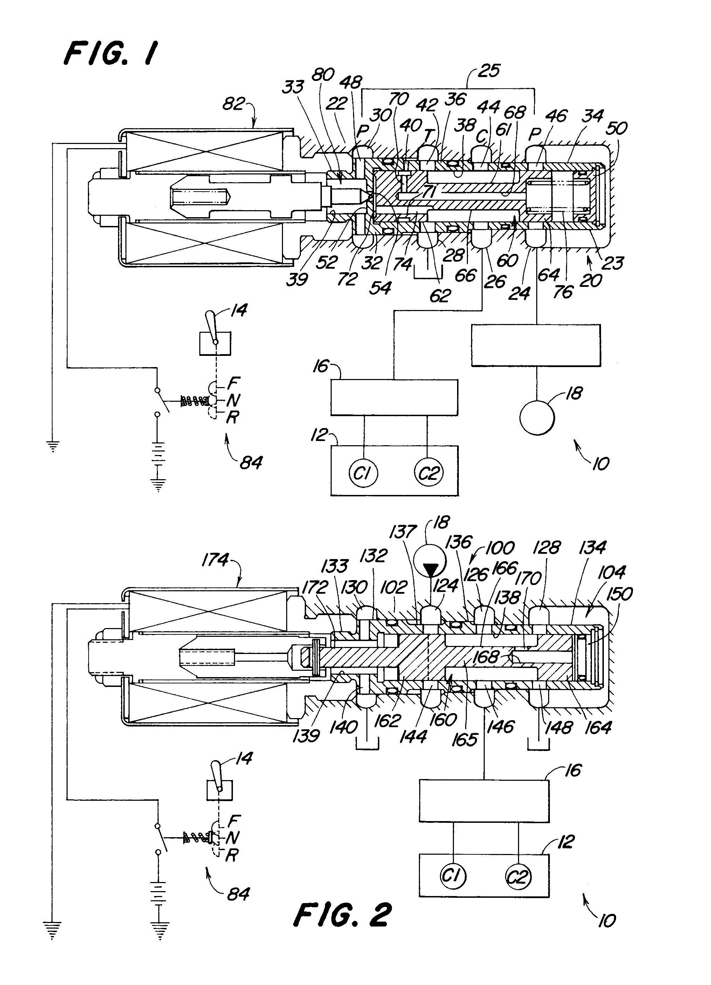

Gemäß Fig. 1 enthält ein Getriebesteuersystem 10 mehrere hydraulisch betätigbare Steuerelemente C1, C2, durch die sich ein Gang eines Lastschaltgetriebes 12 in Abhängigkeit einer Betätigung eines Schalthebels 14, der Neutral- und Nichtneutralstellungen enthält, in Eingriff bringen läßt. Mehrere Steuerventile 16 steuern das Unterdrucksetzen der Steuerelemente C1, C2, und eine Pumpe 18 liefert Druckflüssigkeit an die Steuerventile 16.

Ein Eingriffsübersteuerungsventil 20 steuert die Verbindung zwischen der Pumpe 18 und den Steuerventilen 16. Das Eingriffsübersteuerungsventil 20 umfaßt ein Gehäuse 22, welches eine hohle Steuerhülse 23 aufnimmt. Das Gehäuse 22 bildet eine erste Öffnung 24, welche mit der Ausgangsöffnung der Pumpe 18 verbunden ist, eine zweite Öffnung 26, welche mit den Steuerventilen 16 verbunden ist, eine dritte Öffnung 28, welche mit einem Reservoir verbunden ist, und eine vierte Öffnung 30, welche über die Leitung 25 mit der ersten Öffnung 24 und der Pumpe 18 verbunden ist.

Die Steuerhülse 23 weist einen Abschnitt 32 mit einem großen Durchmesser und einen Abschnitt 34 mit einem kleinen Durchmesser auf, die über einen Abschnitt 36 mit einem dazwischenliegenden Durchmesser in Verbindung stehen. Ein Abschnitt 33 ragt axial über den Abschnitt 32 hinaus. Diese Abschnitte umschließen eine Bohrung 38 und werden gleitbar und dichtend von entsprechenden Bohrungsabschnitten des Gehäuses 22 aufgenommen. Eine Bohrung 39 erstreckt sich axial durch den Abschnitt 33 und in den Abschnitt 32 hinein. Durch den Abschnitt 36 erstrecken sich radiale Öffnungen 40 und 42, die die Öffnung 28 mit der Bohrung 38 verbinden. Eine Öffnung 44 erstreckt sich radial durch den Abschnitt 34 und verbindet die Öffnung 26 mit der Bohrung 38. Eine Öffnung 46 erstreckt sich radial durch den Abschnitt 34 und verbindet die Öffnung 24 mit der Bohrung 38. Eine Öffnung 48 erstreckt sich radial durch den Abschnitt 32 und verbindet die Öffnung 30 mit der Bohrung 39. Ein Ende der Bohrung 38 ist abgedichtet oder mit einem Stopfen 50 verschlossen. Eine Stirnwandung 52 trennt die Bohrung 38 von der Bohrung 39, die lediglich über eine zentrale Öffnung 54 miteinander verbunden sind.

Ein Ventilteil 60 wird gleitend von der Bohrung 38 aufgenommen und enthält einen Schaft 61 sowie Ringschultern 62 und 64, die durch einen Einschnitt 66 voneinander getrennt sind. Eine zentrale Axialbohrung 68 erstreckt sich vom Ende der Ringschulter 64 durch den Schaft 61 und teilweise in die Ringschulter 62 hinein. Eine radiale Bohrung 70 sowie eine Ringnut 71 verbinden die Bohrung 68 mit der äußeren Oberfläche der Ringschulter 62. Die Stirnwandung 52 und die Ringschulter 62 wirken zusammen, um zwischen sich eine Pilotkammer 72 einzuschließen. Eine Bohrung 74 erstreckt sich axial durch die Ringschulter 62 und verbindet die Pilotkammer 72 mit dem Einschnitt 66. Eine Feder 76 ist zwischen dem Stopfen 50 und dem Ventilteil 60 angeordnet und drückt das Ventilteil 60 von dem Stopfen 50 weg.

Ein Pilotventilteil 80 steht mit der Stirnwandung 52 in Eingriff, um die Öffnung 54 zu öffnen und zu verschließen. Eine Magnetspule 82 steuert die Bewegung des Pilotventilteils 80. Ein Schalter 84 ist wirkungsmäßig mit dem Schalthebel 14 gekoppelt und verbindet die Magnetspule 82 mit einer 12 Volt Quelle nur dann, wenn der Schalthebel 14 sich in einer Neutralstellung befindet.

### Betriebsweise

Befindet sich der Schalthebel 14 außerhalb seiner Neutralstellung, so wird die Magnetspule 82 nicht erregt, und die Feder 76 hält das Ventilteil 60 in der in Fig. 1 dargestellten Position, in der die Öffnung 46 verschlossen ist und die Öffnung 26 mit der Öffnung 28 in Verbindung steht. Hierdurch wird der Druck des Reservoirs an die Steuerventile 16 geleitet und die Verbindung zwischen der Pumpe 18 und den Steuerventilen 16 geschlossen.

Wird der Schalthebel 14 in seine Neutralstellung bewegt, so wird der Schalter 84 geschlossen und die Magnetspule 82 erregt, wodurch das Pilotventilteil 80 von der Stirnwandung 52 weggezogen und die Öffnung 54 geöffnet wird. Flüssigkeit strömt dann von der Pumpe 18 über die Öffnung 24, die Leitung 25, die Öffnungen 30 und 48, die Bohrung 39 und die Öffnung 54 zu der Pilotkammer 72. Der Druck in der Pilotkammer 72 bewegt das Ventilteil 60 in Blickrichtung der Fig. 1 nach rechts in eine zweite Lage, in der die Öffnungen 28 und 42 durch die Ringschulter 62 gegeneinander verschlossen sind und in der der Pumpendruck über die Öffnung 24, den Einschnitt 66 und die Öffnungen 44 und 26 zu den Steuerventilen 16 geleitet wird. Mit dem nun an den Steuerventilen 16 anstehenden Pumpendruck läßt sich das Lastschaltgetriebe 12 in den gewünschten Gang bringen, der der Position des Schalthebels 14 entspricht. Da der Pumpendruck von der Pumpe 18 über die Öffnungen 24, 46, den Einschnitt 66 und die Bohrung 74 zu der Pilotkammer 72 geleitet wird, bleibt das Ventilteil 60 so lange in seiner rechten, zweiten Lage, wie die Pumpe 18 Druck liefert.

Mit diesem System kann kein Hydraulikdruck zu den Steuerelementen des Lastschaltgetriebes 12 übertragen werden, solange das Pilotventilteil 80 nicht durch die Magnetspule 82 bewegt wird, um die Öffnung 54 frei zu geben, und zwar unabhängig davon, auf welche Weise die nicht gezeigte Antriebsmaschine gestartet wird. Dies ist auch dann der Fall, wenn der Strompfad zu der Magnetspule 82 eines nicht gezeigten Starters durch externe Mittel, wie beispielsweise einen Schraubenzieher, überbrückt wird. Mit anderen Worten, die Steuerelemente des Getriebes 12 können nicht aktiviert werden, bis der Schalthebel 14 in seine Neutralstellung gebracht und elektrische Spannung an den Schalter 84 angelegt wurde.

Fig. 2 illustriert eine alternative Ausgestaltung der vorliegenden Erfindung. Ein alternatives Eingriffsübersteuerungsventil 100 steuert die Verbindung zwischen der Pumpe 18 und den Steuerventilen 16. Das Ventil 100 enthält ein Gehäuse 102, welches eine hohle Steuerhülse 104 aufnimmt. Das Gehäuse 102 und die Steuerhülse 104 wirken zusammen, um eine erste Öffnung 124 , die mit dem Ausgang der Pumpe 18 verbunden ist, eine zweite Öffnung 126, die mit den Steuerventilen 16 verbunden ist, eine dritte Öffnung 128, die mit einem Reservoir verbunden ist, und eine vierte Öffnung 130, die ebenfalls mit dem Reservoir verbunden ist, zu bilden.

Die Steuerhülse 104 weist einen Abschnitt 132 mit einem großen Durchmesser, einen Abschnitt 134 mit einem kleinen Durchmesser, einen Abschnitt 136 mit einem dazwischenliegenden Durchmesser und einen ringnutförmigen Abschnitt 137 auf, welcher die Abschnitte 132 und 136 voneinander trennt. Diese Abschnitte umschließen eine Bohrung 138 und werden gleitbar und dichtend von entsprechenden Bohrungsabschnitten des Gehäuses 102 aufgenommen. Eine Bohrung 139 erstreckt sich axial durch den Abschnitt 133 und in den Abschnitt 132 hinein. Zwei Öffnungen 140 erstrecken sich radial durch den Abschnitt 132 und verbinden die Öffnung 130 mit der Bohrung 139. Zwei Öffnungen 144 erstrecken sich radial durch den ringnutförmigen Abschnitt 137 und verbinden die Öffnung 124 mit der Bohrung 138. Zwei Öffnungen 146 erstrecken sich radial durch den Abschnitt 134 und verbinden die Öffnung 126 mit der Bohrung 138. Zwei Öffnungen 148 erstrecken sich radial durch den Abschnitt 134 und verbinden die Öffnung 128 mit der Bohrung 138. Ein Ende der Bohrung 138 ist abgedichtet oder mit einem Stopfen 150 verschlossen.

Ein Ventilteil 160 wird gleitend von der Bohrung 138 aufgenommen und enthält auf einem Schaft 165 angeordnete Ringschultern 162 und 164, die durch einen Einschnitt 166 voneinander getrennt sind. Eine zentrale Axialbohrung 168 erstreckt sich vom Ende der Ringschulter 164 aus teilweise in den Einschnittsbereich 166 des Schafts 165 hinein. Eine radiale Bohrung 170 verbindet die Bohrung 168 mit der äußeren Oberfläche des Schafts 165. Das Ventilteil 160 enthält ferner einen Schaft 172, der von der Ringschulter 162 absteht. Der Schaft 172 ist an einen Anker einer Magnetspule 174 gekoppelt. Die Magnetspule 174 steuert die Bewegung des Ventilteils 160. Ein Schalter 84 ist wirkungsmäßig mit dem Schalthebel 14 gekoppelt und verbindet die Magnetspule 174 mit einer 12 Volt Quelle nur dann, wenn der Schalthebel 14 sich in einer Neutralstellung befindet.

### Betriebsweise der alternativen Ausgestaltung

Befindet sich der Schalthebel 14 außerhalb seiner Neutralstellung, so wird die Magnetspule 174 nicht erregt, und das Ventilteil 160 bleibt in seiner in Fig. 2 dargestellten Lage, in der die Öffnung 124 verschlossen ist und die Öffnung 126 mit der Öffnung 128 in Verbindung steht. Hierdurch wird der Druck des Reservoirs an die Steuerventile

16 geleitet und die Verbindung zwischen der Pumpe 18 und den Steuerventilen 16 geschlossen. Wird der Schalthebel 14 in seine Neutralstellung bewegt, so wird der Schalter 84 geschlossen und die Magnetspule 174 erregt, wodurch das Ventilteil 160 gemäß Fig. 2 nach links in eine zweite Lage verschoben wird, in der der Reservoiranschluß 128 durch die Ringschulter 164 verschlossen wird und in der der Pumpendruck über die Öffnung 124, die Öffnung 144, die Ringnut 166 und die Öffnungen 146 und 126 an die Steuerventile 16 angelegt wird. Mit dem nun an den Steuerventilen 16 anstehenden Pumpendruck läßt sich das Lastschaltgetriebe 12 in den gewünschten Gang bringen, der der Position des Schalthebels 14 entspricht. Da der Pumpendruck von der Pumpe 18 über die Öffnungen 124, 144, die Ringnut 166, die Öffnung 170 und die Bohrung 168 an das stirnseitige Ende der Ringschulter 164 geleitet wird, bleibt das Ventilteil 160 so lange in dieser zweiten Lage, wie die Pumpe 18 Druck liefert.

Das erfindungsgemäße Eingriffsübersteuerungssystem vermeidet es, daß beim Starten des Fahrzeugs ein Gang eingelegt ist. Es ist auch dort anwendbar, wo der Schalthebel lediglich elektrische Signale abgibt.

Auch wenn die Erfindung lediglich anhand einiger Ausführungsbeispiele beschrieben wurde, erschließen sich für den Fachmann im Lichte der vorstehenden Beschreibung viele verschiedenartige Alternativen, Modifikationen und Varianten, die unter die vorliegende Erfindung fallen.

## Patentansprüche

1. Eingriffsübersteuerungssystem für eine Getriebesteuerung mit mehreren durch Hydraulikdruck betätigbaren Steuerelementen (C1, C2) zum Einrücken eines Ganges des Getriebes (12) in Abhängigkeit von der Einstellung eines Schalthebels (14), welcher Neutral- und Nichtneutralstellungen aufweist, ferner mit mehreren Steuerventilen (16) zur Steuerung des Eingangsdrucks der Steuerelemente (C1, C2) und mit einer Pumpe (18) zur Versorgung der Steuerventile (16) mit Druckflüssigkeit, gekennzeichnet durch
- mit dem Schalthebel (14) gekoppelte Signalerzeugungsmittel (84) zur Erzeugung eines ersten Signals, wenn der Schalthebel (14) sich in einer Neutralstellung befindet und zur Erzeugung eines zweiten Signals, wenn der Schalthebel (14) sich in einer Nichtneutralstellung befindet,
- ein Ventil mit einem Gehäuse (22, 102), das eine erste mit dem Pumpenausgang verbundene Öffnung (24, 124) und eine zweite mit den mehreren Steuerventilen (16) verbundene Öffnung (26, 126) abgrenzt, mit einem Ventilteil (60, 160), welches zwischen einer ersten Lage, in der eine Verbindung zwischen der ersten und zweiten Öffnung (24, 26; 124, 126) blockiert ist und einer zweiten Lage, in der eine Verbindung zwischen der ersten und zweiten Öffnung (24, 26; 124, 126) geöffnet ist, verschiebbar ist, und
- Servomittel (82, 174), die mit den Signalerzeugungsmitteln (84) in Verbindung stehen, um das Ventilteil (60, 160) in Reaktion auf das zweite Signal in seiner ersten Lage zu halten und um das Ventilteil (60, 160) in Reaktion auf das erste Signal in seine zweite Lage zu bewegen.

2. Eingriffsübersteuerungssystem nach Anspruch 1, dadurch gekennzeichnet,
- daß das Gehäuse (22) und das Ventilteil (60) eine Pilotkammer (72) einschließen, die unter Druck setzbar ist, um das Ventilteil (60) in seine zweite Lage zu bewegen,
- daß eine Feder (76) vorgesehen ist, die das Ventilteil (60) in seine erste Lage drängt,
- daß ein Pilotventil (54, 80) vorgesehen ist, das eine Verbindung zwischen der Pumpe (18) und der Pilotkammer (72) steuert, und
- daß zwischen den Signalerzeugungsmitteln (84) und dem Pilotventil (54, 80) Servomittel (82) eingefügt sind, die in Reaktion auf das erste Signal das Pilotventil (54, 80) öffnen und in Reaktion auf das zweite Signal das Pilotventil (54, 80) schließen.

3. Eingriffsübersteuerungssystem nach Anspruch 2, gekennzeichnet durch einen Pilotdurchgang, der den Druck der Pumpe (18) an die Pilotkammer (72) leitet, wenn das Ventilteil (60) sich in seiner zweiten Lage befindet.

4. Eingriffsübersteuerungssystem nach Anspruch 2 oder 3, gekennzeichnet durch ein Hauptventil mit
- einem Gehäuse (22), welches eine Ventilbohrung (38) aufweist, wobei die erste Öffnung (24) die Ventilbohrung (38) mit dem Pumpenausgang verbindet, die zweite Öffnung (26) die Steuerventile (16) mit der Ventilbohrung (38) verbindet, eine Reservoiröffnung (28) die Ventilbohrung (38) mit einem Reservoir verbindet und eine Pumpenöffnung die Pumpe (18) mit der Ventilbohrung (38) verbindet, und
- einem in der Ventilbohrung (38) verschiebbaren Ventilteil (60), welches einen zylindrischen Körper mit einer ersten und einer zweiten Ringschulter (64, 62) enthält, die durch eine Ringnut (66) voneinander getrennt sind, welches ferner eine zentrale Axialbohrung (68) enthält, die sich von einem Ende der ersten Ringschulter (64) bis in den Bereich der zweiten Ringschulter (62) erstreckt, welches ferner eine radiale Bohrung (70) aufweist, die die zentrale Axialbohrung (68) mit der äußeren Fläche der zweiten Ringschulter (62) verbindet, wobei das Gehäuse (23) und das Ventilteil (60) eine Pilotkammer (72) einschließen und das Ventilteil (60) einen Durchgang (74) aufweist, der sich durch die zweite Ringschulter (62) erstreckt und die Pilotkammer (72) mit der Ringnut (66) verbindet.

5. Eingriffsübersteuerungssystem nach Anspruch 1, dadurch gekennzeichnet, daß das Ventilteil (160) einen zylindrischen Schaft (165) mit einer ersten Ringschulter (164) an seinem ersten Ende und eine zweite Ringschulter (162) in seinem mittleren Bereich aufweist, wobei zwischen der ersten und der zweiten Ringschulter (164, 162) eine Ringnut (166) ausgebildet ist, wobei ferner das Gehäuse (104) und die erste Ringschulter (164) einen Druckraum einschließen, und das Ventilteil (160) einen Durchgang (168, 170) aufweist, der sich durch die erste Ringschulter (164) erstreckt und die Druckkammer mit der Ringnut (166) verbindet.

6. Eingriffsübersteuerungssystem nach Anspruch 5, dadurch gekennzeichnet, daß sich der Schaft (165) von der zweiten Ringschulter (162) aus zu seinem zweiten Ende hin erstreckt und daß die Servomittel (174) an das zweite Ende des Schafts (165) gekoppelt sind.

7. Eingriffsübersteuerungssystem nach Anspruch 5 oder 6, dadurch gekennzeichnet, daß das Gehäuse (104) eine Reservoiröffnung (128) aufweist, die mit einem Reservoir in Verbindung steht, und daß die erste Ringschulter (164) bewegbar ist, um die Verbindung zwischen der zweiten Öffnung (126) und der Reservoiröffnung (128) zu öffnen und zu verschließen.

8. Eingriffsübersteuerungssystem nach einem der Ansprüche 5 bis 7, gekennzeichnet durch ein Hauptventil mit
- einem Gehäuse (102), welches eine Ventilbohrung (138) aufweist, wobei die erste Öffnung (124) die Ventilbohrung (138) mit dem Pumpenausgang verbindet, die zweite Öffnung (126) die Steuerventile (16) mit der Ventilbohrung (138) verbindet, eine Reservoiröffnung (128) die Ventilbohrung (138) mit einem Reservoir verbindet, und
- einem in der Ventilbohrung (138) verschiebbaren Ventilteil (160), welches einen zylindrischen Körper mit einer ersten und einer zweiten Ringschulter (164, 162) enthält, die durch eine Ringnut (166) voneinander getrennt sind, welches ferner eine zentrale Axialbohrung (168) enthält, die sich von einem Ende der ersten Ringschulter (164) bis in den Bereich der Ringnut (166) erstreckt, und welches ferner eine radiale Bohrung (170) aufweist, die die zentrale Axialbohrung (168) mit der äußeren Fläche der Ringnut (166) verbindet, wobei das Gehäuse (104) und das Ende der ersten Ringschulter (164) eine Druckkammer einschließen.

9. Eingriffsübersteuerungssystem nach einem der Ansprüche 4 bis 8, dadurch gekennzeichnet, daß die erste Ringschulter (64, 164) bewegbar ist, um die Verbindung zwischen der ersten Öffnung (24, 124) und der zweiten Öffnung (26, 126) zu öffnen und zu verschließen.

10. Eingriffsübersteuerungssystem nach einem der Ansprüche 4 bis 9, dadurch gekennzeichnet, daß die zweite Ringschulter (62, 162) bewegbar ist, um die Verbindung zwischen der zweiten Öffnung (26, 126) und der Reservoiröffnung (28, 128) zu öffnen und zu verschließen.
